# EUROPEAN PATENT APPLICATION

(11) **EP 4 843 969 A1**
(43) Date of publication of application: **25.11.2026**
(21) Application number: 25741909.3
(22) Date of filing: 10.01.2025
(51) Int. Cl.: C04B 35/587, F16C 33/32

(54) **SILICON NITRIDE SINTERED BODY AND WEAR-RESISTANT MEMBER USING SAME**

(30) Priority: 17.01.2024 JP 2024005261
(71) Applicant: Niterra Materials Co., Ltd., Kanagawa 235-0032 (JP)
(72) Inventor: AOKI, Katsuyuki, Yokohama-shi, Kanagawa 235-0032 (JP); SANO, Takashi, Yokohama-shi, Kanagawa 235-0032 (JP)
(74) Representative: Hoffmann Eitle
(86) International application number: PCT/JP2025/000707
(87) International publication number: WO 2025/154683

(57) **Abstract**

A silicon nitride sintered compact according to an embodiment includes silicon nitride crystal particles and a grain boundary phase. In the silicon nitride sintered compact, the silicon nitride crystal particles include a specific silicon nitride crystal particle with which a first solid solution metal containing at least one of tungsten and molybdenum and a second solid solution metal containing aluminum form solid solutions.

## Description

### TECHNICAL FIELD

An embodiment described later mainly relates to a silicon nitride sintered compact and a wear-resistant member including the same.

### BACKGROUND ART

Silicon nitride sintered compacts are used in wear-resistant members. Examples of such wear-resistant members include bearing members, roll materials, compressor vanes, gas turbine blades, and engine parts. Examples of bearing members include bearing balls, bearing inner rings, and bearing outer rings. Examples of roll materials include rolling rolls and transportation rolls. Examples of engine parts include cam rollers. Recently, silicon nitride sintered compacts, which have high mechanical strength and wear resistance, are used as bearing balls as bearing members.

For example, Japanese Patent No. 5100201 (Patent Document 1) discloses a silicon nitride sintered compact comprising needle-like silicon nitride crystal particles whose aspect ratio and standard deviation are controlled. Japanese Patent No. 6416088 (Patent Document 2) discloses a silicon nitride sintered compact including a grain boundary phase whose area ratio is less likely varied. Patent Documents 1 and 2 each cause silicon nitride crystal particles and a grain boundary phase to be uniformly distributed. Thus, silicon nitride sintered compacts having improved wear resistance are obtained.

### PRIOR ART DOCUMENTS

### PATENT DOCUMENT

Patent Document 1: Japanese Patent No. 5100201
Patent Document 2: Japanese Patent No. 6416088
Patent Document 3: Japanese Patent Application Laid-Open No. 2001-335368
Patent Document 4: International Publication No. WO 2020/121752

### SUMMARY OF THE INVENTION

### PROBLEMS TO BE SOLVED BY THE INVENTION

Recently, silicon nitride sintered compacts are used in bearing balls for motors of electric vehicles. This has been significantly increasing a demand for bearing balls formed from silicon nitride sintered compacts. On the other hand, silicon nitride sintered compacts are difficult to process. For this reason, a further improvement in processability of silicon nitride sintered compacts, that is, a reduction in processing time has been demanded in order to achieve mass production of bearing balls formed from silicon nitride sintered compacts. Solid solution formation of a metal element with silicon nitride crystal particles has been found effective in improving the processability. For example, Japanese Patent Application Laid-Open No. 2001-335368 (Patent Document 3) discloses a silicon nitride sintered compact containing silicon nitride crystal particles with which Al, Mg, and a rare earth element form solid solutions. The silicon nitride sintered compact disclosed in Patent Document 3 has improved thermal conductivity because it is intended to be used in a substrate for a semiconductor device. However, the processability is improved more or less, but is not always satisfactory.

An object to be solved by an embodiment is to provide a silicon nitride sintered compact having improved processability and a wear-resistant member including the same.

### MEANS FOR SOLVING THE PROBLEMS

A silicon nitride sintered compact according to an embodiment includes silicon nitride crystal particles and a grain boundary phase. In the silicon nitride sintered compact, the silicon nitride crystal particles include a specific silicon nitride crystal particle with which a first solid solution metal containing at least one of tungsten and molybdenum and a second solid solution metal containing aluminum form solid solutions.

### BRIEF DESCRIPTION OF THE DRAWINGS

[FIG. 1] FIG. 1 is a schematic view illustrating one example of a cross-sectional structure of a silicon nitride sintered compact according to an embodiment.
[FIG. 2] FIG. 2 is an appearance view illustrating one example of a bearing ball based on the silicon nitride sintered compact according to the embodiment.
[FIG. 3] FIG. 3 is an appearance view illustrating one example of bearing ball blank including the silicon nitride sintered compact according to the embodiment.

### DESCRIPTION OF EMBODIMENTS

A silicon nitride sintered compact according to an embodiment includes silicon nitride crystal particles and a grain boundary phase. In the silicon nitride sintered compact, the silicon nitride crystal particles include a specific silicon nitride crystal particle with which a first solid solution metal containing at least one of tungsten and molybdenum and a second solid solution metal containing aluminum form solid solutions.

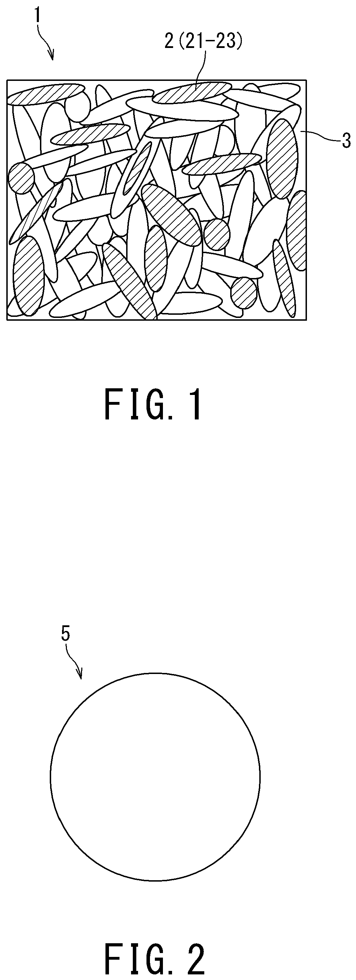

FIG. 1 illustrates one example of a cross-sectional structure of a silicon nitride sintered compact according to an embodiment. In the drawing, a silicon nitride sintered compact 1, silicon nitride crystal particles 2, and a grain boundary phase 3 are illustrated. The silicon nitride crystal particles 2 include a specific silicon nitride crystal particle 21 with which a first solid solution metal containing at least one of tungsten and molybdenum and a second solid solution metal containing aluminum form solid solutions. The silicon nitride crystal particles 2 include a silicon nitride crystal particle 22 not containing either tungsten or molybdenum (referred to as "a different silicon nitride crystal particle" in this specification). Silicon nitride crystal particles 23 are those in the silicon nitride crystal particles 2 excluding the specific silicon nitride crystal particle 21 and the different silicon nitride crystal particle 22 (referred to as "residual silicon nitride crystal particles" in this specification). To be noted, in the silicon nitride crystal particles 2, the presence of the different silicon nitride crystal particle 22 is not essential, and the presence of the residual silicon nitride crystal particles 23 is also not essential. Examples of the different silicon nitride crystal particle 22 include those not containing either tungsten or molybdenum, and those containing only aluminum. Examples of the residual silicon nitride crystal particles 23 include those containing tungsten or molybdenum and not containing aluminum.

The silicon nitride sintered compact 1 has a structure in which the silicon nitride crystal particles 2 are entangled with each other in a complex manner. In the structure of the silicon nitride sintered compact 1, a grain boundary phase 3 is present so as to fill in spaces between the silicon nitride crystal particles 2.

The silicon nitride sintered compact 1 includes, as the silicon nitride crystal particles 2, the specific silicon nitride crystal particle 21 with which the first solid solution metal containing at least one of tungsten and molybdenum and the second solid solution metal containing aluminum form solid solutions.

The elements of the solid solution metals are analyzed by TEM-EDS. TEM-EDS is performed at an accelerating voltage of 200 kV, an irradiation current of 1.00 nA, and a spot diameter in analysis of 1 nm for an analysis time of 30 seconds with a sample angle X of 10° and a sample angle Y of 0°.

In any cross-section of the silicon nitride sintered compact 1, a silicon nitride crystal particle 2 is defined as a measurement region. A spot for analysis is selected from a region near the center of the silicon nitride crystal particle **2.** When at least one of tungsten and molybdenum and aluminum is detected in one silicon nitride crystal particle 2 by this analysis, it is determined that the silicon nitride crystal particle 2 is the specific silicon nitride crystal particle 21 with which the first solid solution metal and the second solid solution metal form solid solutions. If tungsten or molybdenum is not detected or aluminum is not detected in analysis of one silicon nitride crystal particle 2, a different measurement cross-section of the same silicon nitride crystal particle 2 can be reanalyzed. In consideration of the size of the silicon nitride crystal particles 2, silicon nitride crystal particles 2 having a major diameter of 0.5 µm or more are suitably used as measurement targets. This is because silicon nitride crystal particles 2 having a major diameter of less than 0.5 µm as the measurement targets may be affected by the grain boundary phase 3 surrounding these.

Alternatively, the elements of the solid solution metals may be analyzed by FESEM-EDS instead of TEM-EDS. FESEM indicates a field emission scanning electron microscope.

Since the first solid solution metal and the second solid solution metal form solid solutions with the specific silicon nitride crystal particle 21, the combination of the elements of the solid solution metals forming solid solutions with the specific silicon nitride crystal particle 21 is one of "W + Al", "Mo + Al", and "W + Mo + Al". Tungsten and molybdenum are elements having electronegativity greater than that of silicon (Si). Usually, the electronegativity of Si is 1.90, that of N is 3.04, that of W is 2.36, that of Mo is 2.16, that of Al is 1.61, and that of O is 3.44.

Since it is considered that solid solution formation of tungsten and molybdenum acts inside the silicon nitride crystal particles 2 with strength of an interatomic bond different from the Si-N bond, the processability of the silicon nitride sintered compact 1 is improved. Solid solution formation of aluminum is effective in enhancing the hardness of the silicon nitride crystal particles.

For the amount of the first solid solution metal forming a solid solution with the specific silicon nitride crystal particle 21, the ratio of the number of atoms of the first solid solution metal to the number of silicon atoms (the number of Si atoms) "the number of first solid solution metal atoms/the number of Si atoms" is defined as the ratio R1 of the number of first atoms. The ratio R1 of the number of first atoms suitably satisfies the following expression (1): $0.0001 \leq R 1 \leq 0.01$ (1)

For the amount of the second solid solution metal (Al) forming a solid solution with the specific silicon nitride crystal particle 21, the ratio of the number of atoms of the second solid solution metal to the number of Si atoms "the number of second solid solution metal atoms/the number of Si atoms" is defined as the ratio R2 of the number of second atoms. The ratio R2 of the number of second atoms suitably satisfies the following expression (2): $0.001 \leq R 2 \leq 0.1$ (2)

When the ratio R1 of the number of first atoms satisfies the expression (1) and the ratio R2 of the number of second atoms satisfies the expression (2), the processability of the silicon nitride sintered compact 1 is improved. When the ratio R1 of the number of first atoms is less than 0.0001, the effect caused by solid solution formation of tungsten or molybdenum may be insufficient. When the ratio R1 of the number of first atoms is more than 0.01, the specific silicon nitride crystal particle 21 may become unstable. To be noted, when both of tungsten and molybdenum form solid solutions with the specific silicon nitride crystal particle 21, the ratio R1 of the number of first atoms is determined using the total number of atoms of these.

When the ratio R2 of the number of second atoms is less than 0.001, the amount of the second solid solution metal forming a solid solution may be insufficient. When the ratio R2 of the number of second atoms is more than 0.1, the amount of the second solid solution metal forming a solid solution is excessively large and the specific silicon nitride crystal particle 21 may become unstable.

The ratio R1 of the number of first atoms more suitably satisfies the following expression (3): $0.0005 \leq R 1 \leq 0.002$ (3)

The ratio R2 of the number of second atoms more suitably satisfies the following expression (4): $0.01 \leq R 2 \leq 0.04$ (4)

In the silicon nitride sintered compact 1, silicon nitride crystal particles 2 with which only one selected from the group consisting of tungsten, molybdenum, and aluminum forms a solid solution may be present as the different silicon nitride crystal particle 22 or the residual silicon nitride crystal particles 23.

In any cross-section of the silicon nitride sintered compact 1, the proportion U1 [%] of the number of specific silicon nitride crystal particles 21 with which the first solid solution metal and the second solid solution metal form solid solutions in the total number of silicon nitride crystal particles 2 in a measurement area of 20 µm × 20 µm suitably satisfies the following expression (5). Here, "any cross-section" can be any cross-section of the silicon nitride sintered compact 1 as long as it is a cross-section cut into a size of "20 µm × 20 µm". $10 \leq U 1 \left[%\right] \leq 100$ (5)

The number of silicon nitride crystal particles 2 in a measurement area of 20 µm × 20 µm is determined by counting the number of silicon nitride crystal particles 2 having a major diameter of 0.5 µm or more in a cross-sectional photograph. Any ten or more silicon nitride crystal particles 2 are selected from silicon nitride crystal particles 2 having a major diameter of 0.5 µm or more, and the amounts of tungsten, molybdenum, and aluminum forming solid solutions are measured. The number of specific silicon nitride crystal particles 21 showing solid solution formation of the first solid solution metal and the second solid solution metal is counted.

The proportion U1 [%] of the number of specific silicon nitride crystal particles 21 is determined from the following expression (6). The number of silicon nitride crystal particles 2 having a major diameter of 0.5 µm or more is defined as C, and the number of specific silicon nitride crystal particles 21 having a major diameter of 0.5 µm or more is defined as C1. $U 1 \left[%\right] = C 1 / C \times 100$ (6)

When ten silicon nitride crystal particles 2 having a major diameter of 0.5 µm or more are not observed in a measurement area of 20 µm × 20 µm, another measurement area is used. The major diameter of the silicon nitride crystal particles 2 indicates the longest diagonal line in each of the silicon nitride crystal particles 2. The major diameter is determined on an observation screen in TEM or FESEM. Although the measurement area of 20 µm × 20 µm contains ten or more silicon nitride crystal particles 2 having a major diameter of 0.5 µm or more, all the silicon nitride crystal particles 2 having a major diameter of 0.5 µm or more may be measured. Although those having a major diameter of 0.5 µm or more are determined as the measurement target in consideration of the measurement precision as described above, in order to obtain the effects such as processability, the measurement target is preferably a specific silicon nitride crystal particle 21 having a major diameter of 0.5 µm or more with which tungsten or the like forms a solid solution.

The silicon nitride crystal particles with which a metal forms a solid solution are referred to as metal solid solution-type silicon nitride crystal particles in some cases. When the proportion U1 of the number of specific silicon nitride crystal particles 21 as part of the metal solid solution-type silicon nitride crystal particles to that of the silicon nitride crystal particles 2 falls within the range of 10% or more in the measurement area of 20 µm × 20 µm (the expression (5) above), higher effects can be obtained. Further, the proportion of the number of specific silicon nitride crystal particles 21 preferably satisfies the following expression (7): $30 \leq U 1 \left[%\right] \leq 100$ (7)

For the amount of oxygen (O) forming a solid solution with the specific silicon nitride crystal particle 21, the ratio of the number of oxygen atoms (the number of O atoms) to the number of Si atoms "the number of O atoms/the number of Si atoms" is defined as the ratio R3 of the number of third atoms. The ratio R3 of the number of third atoms suitably satisfies the following expression (8): $0.001 \leq R 3 \leq 1.20$ (8)

This represents the amount of oxygen forming a solid solution with the specific silicon nitride crystal particle 21. A solid solution of oxygen in the specific silicon nitride crystal particle 21 forms a SiAlON crystal structure together with a solid solution of aluminum, and generates solid solution reinforcing effects such as an improvement in hardness. It is considered that oxygen and aluminum form mainly substitutional solid solutions while tungsten and molybdenum form mainly interstitial solid solutions. A combination of an interstitial one with a substitutional one can provide higher effects. The substitutional solid solution is formed by substituting part of Si or N in the silicon nitride crystal lattice with O or Al. The interstitial solid solution is formed by causing W or Mo to enter gaps in the silicon nitride crystal lattice.

When the ratio R3 of the number of third atoms is less than 0.001, the amount of oxygen forming a solid solution is small, which may lead to insufficient effects. When the ratio R3 of the number of third atoms is more than 1.20, the amount of oxygen is excessively large, which may lead to an unstable specific silicon nitride crystal particle 21. For this reason, the ratio R3 of the number of third atoms preferably satisfies the following expression (9): $0.05 \leq R 3 \leq 1.0$ (9)

The proportion U2 [%] of the number of different silicon nitride crystal particles 22 in the number of silicon nitride crystal particles 2 in a measurement area of 20 µm × 20 µm in any cross-section of the silicon nitride sintered compact 1 suitably satisfies the following expression (10). More preferable is the case represented by the following expression (11). $0 \leq U 2 \leq 30$ (10) $0 \leq U 2 < 10$ (11)

The different silicon nitride crystal particle 22 indicates those from which none of W and Mo is detected by TEM-EDS described above (including the detection limit or less) (irrespective of whether Al is detected or not). By definition, the different silicon nitride crystal particle 22 includes those not containing a solid solution metal and those with which Al, O, and/or other metals (metals other than W and Mo) form solid solutions. The properties of the silicon nitride sintered compact 1 according to the embodiment are improved by causing the specific silicon nitride crystal particle 21 to be present. Thus, a smaller amount of the different silicon nitride crystal particle 22 is preferred.

Examples of solid solution metals other than W and Mo which form solid solutions with the specific silicon nitride crystal particle 21 include Fe (iron). For the number of Fe atoms as the fourth atoms in the specific silicon nitride crystal particle 21 with which Fe forms a solid solution, "the number of fourth atoms/the number of Si atoms" is defined as the ratio R4 of fourth atoms. The ratio R4 of fourth atoms preferably satisfies the following expression (12): $0.0001 \leq R 4 \leq 0.002$ (12)

In any cross-section of the silicon nitride sintered compact 1, the proportion U3 [%] of the number of specific silicon nitride crystal particles 21 having dislocation defects in the total number of specific silicon nitride crystal particles 21 in a measurement area of 20 µm × 20 µm suitably satisfies the following expression (13). This is satisfied in order not to reduce the wear resistance of the silicon nitride sintered compact 1. $0 \leq U 3 \left[%\right] \leq 10$ (13)

This indicates a small amount of the specific silicon nitride crystal particle 21 having dislocation defects.

The dislocation defects are crystal defects contained in crystals. Crystal defects are also referred to as lattice defects. Such crystal defects are caused by disordered atomic arrangement or impurities. The dislocation defects cause defects in a stable crystal structure. As described above, solid solution formation of W, Mo, Al, and O with the silicon nitride crystal particles is interstitial and substitutional. A small amount of the specific silicon nitride crystal particle 21 having dislocation defects indicates that the presence of those solid solution metals does not cause breakage of the crystal structure.

The presence/absence of dislocation defects can be analyzed by the method disclosed in International Publication No. WO 2020/121752 (Patent Document 4). Specifically, it is determined by observing the dark field and bright field of a TEM image. The dislocation defects look white in the dark field, and look black in the bright field as a reverse image. The sites containing pixels whose colors are reversed by switching between the dark field and the bright field are defined as dislocation defects. If overlapping sites containing pixels whose colors are reversed from white to black or vice versa are observed, such sites are dislocation defects.

The presence of dislocation defects may reduce the wear resistance of the silicon nitride sintered compact 1. Thus, the proportion of the number of specific silicon nitride crystal particles 21 having dislocation defects in the total number of specific silicon nitride crystal particles 21 preferably satisfies the expression (13), and further satisfies the following expression (14): $0 \leq U 3 \left[%\right] \leq 5$ (14)

The proportion U4 [%] of the number of specific silicon nitride crystal particles 21 having dislocation defects in the total number of silicon nitride crystal particles 2 including the different silicon nitride crystal particle 22 preferably satisfies the following expression (15): $0 \leq U 4 \left[%\right] \leq 10$ (15)

The average of the major diameters of the silicon nitride crystal particles 2 is preferably in the range of 0.5 µm or more and 10 µm or less, and the average aspect ratio is preferably in the range of 2 or more and 10 or less. When the average of the major diameters is less than 0.5 µm, the silicon nitride crystal particles 2 are too small, which may reduce the durability. When the average of the major diameters is more than 10 µm, gaps between silicon nitride crystal particles 2 are increased, which may reduce the strength.

The major diameters of the silicon nitride crystal particles 2 are measured using an SEM photograph. An SEM photograph of any cross-section of the silicon nitride sintered compact 1 is captured. The cross-section is prepared into a polished surface having a surface roughness Ra of 1 µm or less. The magnification of the SEM photograph is set at 1000x or more. The recommended magnification of the SEM photograph is 4000x. The measurement area is 300 µm × 300 µm.

In each of the silicon nitride crystal particles 2 captured in the SEM photograph, the longest diagonal line is defined as the major diameter. Among the silicon nitride crystal particles 2 captured in a measurement area of 300 µm × 300 µm, 50 silicon nitride crystal particles are selected in order of decreasing major diameter, and their major diameters are averaged to determine the average of the major diameters. In each of the selected silicon nitride crystal particles 2, a line orthogonally drawn from the center of the major diameter is defined as the minor diameter. The aspect ratio is defined as a ratio of the major diameter to the minor diameter, and the average of the aspect ratios is defined as the average aspect ratio.

The grain boundary phase contains a sintering aid as the main component. Examples of the sintering aid include rare earth element compounds, aluminum compounds, tungsten compounds, molybdenum compounds, titanium compounds, hafnium compounds, zirconium compounds, and silicon carbide.

Preferably, as the sintering aid, rare earth element compounds and aluminum compounds are used, and further, at least one selected from the group consisting of tungsten compounds, molybdenum compounds, titanium compounds, hafnium compounds, zirconium compounds, and silicon carbide is used. When at least one selected from the group consisting of tungsten compounds, molybdenum compounds, titanium compounds, hafnium compounds, zirconium compounds, and silicon carbide is present in the grain boundary phase as a crystal compound, the grain boundary phase can be reinforced. Thus, the wear resistance of the silicon nitride sintered compact 1 can be improved. The silicon nitride sintered compact 1 containing a rare earth element compound and an aluminum compound as the sintering aids is likely to have a thermal conductivity of 30 W/m·K or less.

Such a silicon nitride sintered compact 1 can have a 3-point bending strength of 600 MPa or more, and further can have a 3-point bending strength of 900 MPa or more. The fracture toughness thereof can be 6.0 MPa·m^{1/2} or more, and further, can be 7.0 MPa·m^{1/2} or more. The Vickers hardness thereof can be 1400 or more, and further, can be 1500 or more.

The 3-point bending strength is measured in accordance with JIS-R-1601 (2008). JIS-R-1601 corresponds to ISO14704. The fracture toughness can be determined by an IF method in accordance with JIS-R-1607 (2015) using Niihara's equation. JIS-R-1607 corresponds to ISO15732. The Vickers hardness can be measured in accordance with JIS-R-1610 (2003). JIS-R-1610 corresponds to ISO14705.

The machinable coefficient can be 0.12 or less. The machinable coefficient Mc is a coefficient which represents free-machining properties and thus processability and is determined using the indentation load (Fn), the Vickers hardness (Hv), and the fracture toughness (K_{1c}). This is a relational expression of a lateral crack fracture model, and Mc represents the amount of substance removed by one abrasive grain. A greater machinable coefficient Mc indicates a larger one-time processing amount.

The lateral crack fracture model is a model proposed by Evans and Marshall as a material removal mechanism during grinding. This model indicates that the amount of substance removed (delta V) when one grinding abrasive grain passes through a material surface is proportional with the value of [Fn^{9/8}/(K_{1c}^{1/2}·Hᵥ^{5/8})] in the relation among the force Fn which vertically presses the abrasive grain into the material, the Vickers hardness (Hv), and the fracture toughness (K1C). Here, the delta V is replaced by the machinable coefficient Mc.

Processing is mainly classified into a brittle mode and a ductile mode. The brittle mode corresponds to so-called rough processing, and the ductile mode corresponds to so-called finish processing. It is considered that wear corresponds to the ductile mode. Thus, to satisfy the performance required for the wear-resistant member, it is important to improve the processability in the brittle mode without reducing the processability in the ductile mode. As one of the wear models, a mechanism is considered in which propagation of slight precrack generated at a grain boundary leads to breakage of the material surface, which causes wear.

The parameter Sc.m representing severity of the mechanical contact in the wear model is represented by the following expression (16) using the coefficient of friction µ, the maximum Hertz stress Pmax, the crystal particle size d of the material, and the fracture toughness K1c: $Sc . m = \left[\left(1+10⋅μ\right)⋅Pmax⋅\left({d}^{1 / 2}\right)\right] / {K}_{1 c}$ (16)

A larger value of the parameter Sc.m indicates higher wear of the material, and a smaller value of the parameter Sc.m indicates lower wear of the material. This indicates that by selecting a smaller crystal particle size d of the material or a greater fracture toughness K_{1c}, the wear of the material can be suppressed. The silicon nitride sintered compact 1 according to the embodiment can have improved free-machining properties irrespective of a small machinable coefficient Mc of 0.12 or less.

The silicon nitride sintered compact 1 according to the embodiment is suitable for a wear-resistant member. The wear-resistant member preferably has a sliding surface having a surface roughness Ra of 0.1 µm or less. Examples of the wear-resistant member include bearing members, roll materials, compressor vanes, gas turbine blades, and engine parts. Examples of bearing members include bearing balls, bearing inner rings, and bearing outer rings. Examples of roll materials include rolling rolls and transportation rolls. Examples of engine parts include cam rollers.

The wear-resistant member has a sliding surface which slides on a counterpart member. For example, a bearing ball is disposed between the inner ring of the bearing and the outer ring thereof. In a bearing ball formed from a ball-shaped silicon nitride sintered compact 1, the entire surface of the ball serves as the sliding surface. In a roll formed from a cylindrical silicon nitride sintered compact 1, the surface of the roll serves as the sliding surface.

To improve the wear resistance of the sliding surface, polishing of the sliding surface to have a surface roughness Ra of 0.1 µm or less is effective. In the silicon nitride sintered compact 1 according to the embodiment, the solid solution metals such as W, Mo, and Al are controlled. Thereby, the free-machining properties are improved. For example, the surface roughness of the bearing ball is specified in ASTM_F2094. A bearing ball having a grade specified in ASTM_F2094, ISO_26602, or JIS_R1669 is used according to its application. The sliding surface is polished to have a surface roughness Ra according to the grade. When the grade is higher, the sliding surface may be subjected to a mirror surface treatment to have a surface roughness Ra of 0.01 µm or less. In the silicon nitride sintered compact 1 according to the embodiment, the free-machining properties are improved while the wear resistance is maintained. The polishing step for obtaining a sliding surface having a surface roughness Ra of 0.1 µm or less can be efficiently performed.

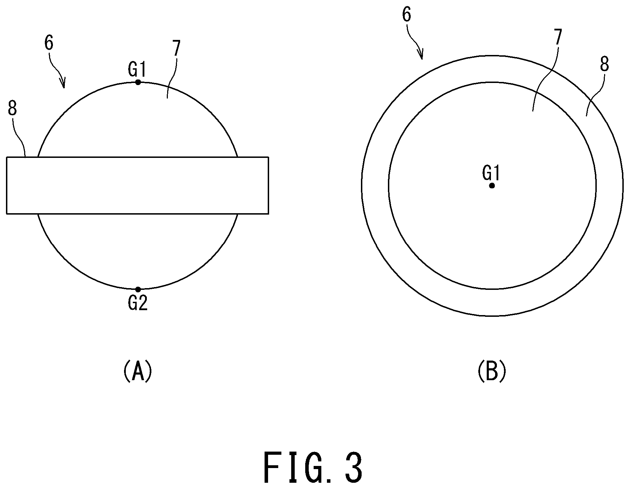

FIG. 2 illustrates one example of a bearing ball, and FIG. 3 illustrates one example of a bearing ball blank (hereinafter, simply referred to as "ball blank"). The drawings illustrate a bearing ball 5, a ball blank 6, a spherical surface 7 of the ball blank 6, and a band portion 8 of the ball blank 6. Division (A) of FIG. 3 illustrates a ball blank 6 viewed in a direction perpendicular to the straight line connecting two poles G1 and G2 of the band portion 8 (two vertices when a surface including the band portion 8 is regarded as the bottom), and division (B) of FIG. 3 illustrates the ball blank 6 viewed in a direction along the line connecting the two poles G1 and G2 of the band portion 8. The ball blank 6 is polished to give a bearing ball 5. Although FIG. 3 exemplifies the ball blank 6 having the band portion 8 on a perimeter of the spherical surface 7, the ball blank without the band portion 8 can be used. In other words, the ball blank 6 corresponds to the bearing ball 5 before polishing.

Next, a method of producing the silicon nitride sintered compact 1 according to the embodiment will be described. Although the silicon nitride sintered compact 1 according to the embodiment can be produced by any production method as long as it has the above-mentioned configuration, a method for producing the silicon nitride sintered compact 1 according to the embodiment with high yield will be described below.

Initially, raw material powders are provided. The raw material powders are a silicon nitride powder and a sintering aid powder. The silicon nitride powder preferably has an average particle size of 3 µm or less. In addition, the silicon nitride powder preferably contains 3% by mass or less of oxygen and has an α-phase ratio of 90% or more. Alternatively, a silicon nitride powder mixed with a SiAlON powder may be used. When a SiAlON powder is used, Al preliminarily forms a solid solution with a silicon nitride powder mixed therewith.

Examples of the sintering aid powder include rare earth element component powders, first component powder corresponding to the first solid solution metal (at least one component powder of tungsten component powder (W component powder) and molybdenum component powder (Mo component powder)), and second component powder corresponding to the second solid solution metal (aluminum component powder). For example, as the sintering aid powders, a rare earth element component powder, a tungsten component powder (or molybdenum component powder), and an aluminum component powder are used. The sintering aid powders preferably have an average particle size of 4 µm or less.

Examples of the rare earth element component powders include powders of oxides, nitrides, and oxynitrides of rare earth elements. Preferred rare earth elements are yttrium and lanthanoids elements. Examples of the aluminum component powder as the second component powder include powders of oxides, nitrides, and oxynitrides of aluminum. Examples of the first component powder include powders of oxides, nitrides, carbides, sulfides, oxynitrides, oxycarbides, and carbonitrides of the above-mentioned metals. Among these, oxides or carbides thereof are preferred. Examples of the oxides include tungsten oxide (WO₃) and molybdenum oxide (MoO₃). Examples of the carbides include tungsten carbides (WC, W₂C) and molybdenum carbide (Mo₂C).

In particular, powders of those oxides are preferably used as the first component powder. WO₃ has a melting point of 1473°C, MoO₃ has a melting point of 795°C, WC has a melting point of 2870°C, and Mo₂C has a melting point of 2687°C. The melting points of the oxides are lower than the sintering temperature described later. By using such oxides having melting points lower than the sintering temperature, the first solid solution metal (W and/or Mo) can form a solid solution with the specific silicon nitride crystal particle 21.

To cause the first solid solution metal (W and/or Mo) to form a solid solution with the silicon nitride crystal particle 21, use of a silicon nitride powder preliminarily coated with the first component powder is also effective. Such a silicon nitride powder coated with the first component powder is effectively prepared by mechanical alloying. In mechanical alloying, the coating is performed while the material is being milled. Thus, the reactivity between silicon nitride and the coating material can be increased. Hence, with grain growth of silicon nitride, an effect of promoting formation of a solid solution with the coating element can be expected.

Another method involves mixing powders prepared under different disintegration conditions in a step of mixing the raw material powders described later. When the total amount of the silicon nitride powder and the first solid solution metal powder is 100 parts by mass, preferably, 30 parts by mass or more and 95 parts by mass or less of the powders is preliminarily subjected to a preparative disintegration mixing treatment. A preferred preparative disintegration mixing treatment is a treatment for controlling the average particle size D₅₀ of the resulting powder mixture to 2/3 or less of that of the powders before being subjected to the preparative disintegration mixing treatment. The step of mixing the raw material powders is preferably performed by mixing those subjected to the preparative disintegration mixing treatment with those not subjected to the preparative disintegration mixing treatment. In a sintering step, a powder having a small particle size serves as a nucleus, which can promote solid solution formation of the first solid solution metal (such as W) with the silicon nitride crystal particle 21. The average particle size D₅₀ indicates the median particle size.

A sintering aid other than those described above may be added to the raw material powders as needed. Examples of the sintering aid other than those described above include at least one selected from the group consisting of titanium component powders, hafnium component powders, zirconium component powders, cobalt component powders, iron component powders, and silicon carbide powders.

In 100% by mass of "silicon nitride powder" + "rare earth element component powder" + "first component powder" + "second component powder (aluminum component powder)" + "component powder other than these powders", preferably, the content of "rare earth element component powder" is 1% by mass or more and 13% by mass or less, that of "first component powder" is 0.1% by mass or more and 7% by mass or less, that of "second component powder" is 1% by mass or more and 10% by mass or less, that of "component powder other than these powders" is 0% by mass or more and 8% by mass or less, and the balance is that of "silicon nitride powder". The "first component powder" represents the W component powder, the Mo component powder, or the WMo component powder. The "component powder other than these powders" represents a component powder added as the sintering aid. An organic binder and a solvent are excluded.

Next, a step of mixing the raw material powders is performed. The mixing step is performed using a disintegration mixer such as a ball mill. A ball mill can disintegrate the raw material powders by optimizing the disintegration medium and the solvent. By disintegrating the raw material powders, residual aggregates can be suppressed. The ball mill can be either a wet type or a dry type. The mixing step may be performed by adding an organic binder and a solvent to the raw material powders as needed.

Next, the raw material prepared in the mixing step is molded into a silicon nitride green compact (hereinafter, simply referred to as "green compact") in a molding step. The raw material may be granulated, and then molded. The molding step can be performed by mold molding, tumbling granulation, cold isostatic pressing (CIP), doctor blading, or injection molding, for example. When a spherical green compact is prepared, mold molding, tumbling granulation, and CIP are preferably used. CIP of a green compact prepared by mold molding or tumbling granulation is also effective. CIP is a molding method in which a liquid is used as a pressurizing medium. Since the liquid isotropically applies pressure, a green compact having a uniform distribution of density can be obtained. The pressure for CIP is preferably in the range of 80 MPa or more and 500 MPa or less.

The green compact is subjected to a drying step as needed. The drying step has an effect of removing the solvent when wet mixing is performed in the mixing step. Examples of the drying step include spontaneous drying and drying with heating. In drying with heating, the temperature is controlled preferably in the range of 80°C or higher and 200°C or lower. At a temperature of less than 80°C, the drying efficiency may be reduced. At a temperature of more than 200°C, uneven drying may occur. For this reason, the drying temperature is in the range of preferably 80°C or higher and 200°C or lower, more preferably 100°C or higher and 160°C or lower.

Next, the green compact is subjected to a degreasing step as needed. The organic binder can be removed from the green compact by performing the degreasing step. The degreasing temperature is preferably in the range of 400°C or higher and 700°C or lower. Examples of the degreasing step include degreasing in the air and that in a nitrogen atmosphere. A green compact obtained through the degreasing step may be referred to as degreased green compact in some cases.

Next, the green compact, for example, the degreased green compact is subjected to a sintering step. The sintering temperature in the sintering step is preferably in the range of 1600°C or higher and 2000°C or lower. The sintering step can be performed using normal pressure sintering, pressure sintering, or hot isostatic pressing (HIP), for example. Examples of the sintering step include sintering in the air, that in a non-oxidative atmosphere, that in a reducing atmosphere, and that in vacuum. The normal pressure sintering indicates sintering under a condition where the pressure is controlled to 1 atmospheric pressure (0.9 to 1.1 atm = 0.09 to 0.11 MPa). The pressure sintering indicates sintering under a pressure higher than the atmospheric pressure. Uniaxial pressure sintering may be referred to as hot press in some cases. HIP is a sintering method in which a gas isotropically applies pressure.

This can reduce internal defects inside the silicon nitride sintered compact 1, such as vacancy and crack. The pressure for HIP is preferably in the range of 10 MPa or more and 200 MPa or less. Alternatively, normal pressure sintering, pressure sintering, and HIP can be used in combination. In the wear-resistant member, one or both of pressure sintering and HIP are preferably used. By sintering while pressure is being applied, a silicon nitride sintered compact 1 (e.g., ball blank 6) having reduced internal defects can be obtained. For the sintering time, preferably, the retention time at the sintering temperature is 1 hour or longer. In other words, the sintering temperature indicates a temperature kept in the range of 1600°C or higher and 2000°C or lower for 1 hour or longer.

In the sintering step, when the sintering temperature is higher than the melting point of the tungsten component powder or that of the molybdenum component powder, preferably, the temperature is retained for 3 hours or longer at a temperature near the melting point of the tungsten component powder or that of the molybdenum component powder added as the sintering aid. The retention at the temperature near the melting point of the tungsten component powder or that of the molybdenum component powder is referred to as a midway retention step. The temperature near the melting point is a temperature of the melting point ±50°C. For example, since the melting point of the WO₃ powder is 1473°C, the retention temperature is within the range of 1473 ±50°C. Since the melting point of MoO₃ is 795°C, the retention temperature is 795°C ±50°C. The retention temperature in the midway retention step is referred to as midway retention temperature.

By retention at a temperature near the melting point of the tungsten component powder or molybdenum component powder added as the sintering aid, the first solid solution metal can form a solid solution with the silicon nitride crystal particle 21. When both of the tungsten component powder and the molybdenum component powder are added, preferably, the retention is performed at the respective temperatures near the melting points thereof. The upper limit of the retention time is not particularly limited. The upper limit is preferably 10 hours or shorter.

As the aluminum component powder, preferably, both of aluminum oxide (Al₂O₃) powder and aluminum nitride (AlN) powder are used. Compared between aluminum oxide and aluminum nitride, solid solution formation of aluminum in aluminum nitride with silicon nitride is more likely to proceed. Thereby, solid solution formation of Al with silicon nitride can be promoted. The amount (mass) of the aluminum oxide powder added is preferably equal to or smaller than the amount of the aluminum nitride powder added. When the amount of aluminum nitride is larger, solid solution formation of the aluminum element is more likely to occur. This is an effective method in increasing silicon nitride crystal particles with which Al forms a solid solution.

The silicon nitride sintered compact 1 can be obtained through the sintering step. The sliding surface of the silicon nitride sintered compact 1 is polished to prepare a wear-resistant member. For example, in a ball-shaped silicon nitride sintered compact 1 (e.g., the ball blank 6) for obtaining a bearing ball, the entire surface serves as the sliding surface.

Preferably, the sliding surface of the silicon nitride sintered compact 1 has a surface roughness Ra of 0.1 µm or less. By controlling the surface of the silicon nitride sintered compact 1 to be substantially a flat surface, the silicon nitride sintered compact 1 can have improved wear resistance. For this reason, the surface roughness Ra of the sliding surface is preferably 0.1 µm or less, more preferably 0.01 µm or less. The silicon nitride sintered compact 1 according to the embodiment has excellent free-machining properties, and thus has improved processability when prepared into a wear-resistant member. In other words, the polishing time for preparing the silicon nitride sintered compact 1 into a wear-resistant member can be reduced.

Moreover, the durability of the grinding wheel for polishing the silicon nitride sintered compact 1 can be improved. Usually, a diamond grinding wheel is used in the step of polishing the silicon nitride sintered compact 1. Improved durability of the grinding wheel is effective not only in reducing costs but also in the production efficiency of the wear-resistant member (improvement in processability). Thus, the silicon nitride sintered compact 1 having improved processability can be provided.

### Examples

### (Examples 1 to 5, Comparative Examples 1 to 2)

As raw material powders, a silicon nitride powder and sintering aid powders were provided. The raw material powders for silicon nitride sintered compacts 1 according to Examples 1 to 5 and those for silicon nitride sintered compacts according to Comparative Examples 1 to 2 were each a mixture as shown in Table 1. The mixing ratio is shown where silicon nitride powder + sintering aid powders is regarded as 100% by mass.

**[Table 1]**

| | Raw Material Powders [% by mass] |
|---|---|
| Example 1 | Si₃N₄(94), Y₂O₃(3), Al₂O₃(1), AlN(1), WO₃(1) |
| Example 2 | Si₃N₄(89), Y₂O₃(5), Al₂O₃(1), AlN(3), WO₃(2) |
| Example 3 | Si₃N₄(88), Er₂O₃(4), Al₂O₃(3), AlN(4), MoO₃(1) |
| Example 4 | Si₃N₄(87), Y₂O₃(1), Er₂O₃(2), Al₂O₃(1), AlN(5), WO₃(1), ZrO₂(3) |
| Example 5 | Si₃N₄(88), Y₂O₃(2), Al₂O₃(2), AlN(5), WO₃(1), MoO₃(1), HfO₂(1) |
| Comparative Example 1 | Si₃N₄(91), Y₂O₃(5), Al₂O₃(3), TiO₂(1) |
| Comparative Example 2 | Si₃N₄(91), Y₂O₃(3), Al₂O₃(4), AlN(1), WO₃(1) |

In Example 2, Si₃N₄ powder and WO₃ powder treated by mechanical alloying were used. In Example 3, Si₃N₄ powder and MoO₃ powder treated by mechanical alloying were used.

The raw material powders were mixed using a ball mill. An organic binder and a solvent were added to the raw material powders, and were mixed using the ball mill.

Subsequently, the raw material powders mixed using the ball mill were granulated, followed by mold molding and CIP. The resulting ball-shaped green compact had a band portion on a perimeter of the spherical green compact. This green compact was the one for obtaining the ball blank 6 after sintering.

The green compact was subjected to a degreasing step. The degreasing step was performed in the range of 400 to 650°C. The resulting green compact, i.e., the degreased green compact was subjected to a sintering step. The sintering step was performed in two stages. The sintering conditions were as shown in Table 2.

**[Table 2]**

| | Midway Retention Temp. [°C] | Sintering Step (Pressure - sintering temperature - Sintering Temp. Retention Time) | |
|---|---|---|---|
| Example 1 | 1500 | 0.5MPa - 1750°C - 4hr | 100MPa - 1750°C - 2hr (HIP) |
| Example 2 | 1500 | 1MPa - 1800°C - 6hr | 100MPa - 1750°C - 2hr (HIP) |
| Example 3 | 800 | 1MPa - 1750°C - 4hr | 90MPa - 1700°C - 4hr (HIP) |
| Example 4 | 1500 | 0.7MPa - 1700°C - 6hr | 90MPa - 1700°C - 1hr (HIP) |
| Example 5 | 800, 1500 | 0.7MPa - 1750°C - 4hr | 100MPa - 1750°C - 2hr (HIP) |
| Comparative Example 1 | - | 0.7MPa - 1800°C - 6hr | 100MPa - 1800°C - 2hr (HIP) |
| Comparative Example 2 | - | 1MPa - 1750°C - 8hr | 90MPa - 1750°C - 4hr (HIP) |

As shown in Table 2, in Examples 1, 2, and 4, the green compacts were retained at 1500°C for 3 hours or longer. In Example 3, the green compact was retained at 800°C for 3 hours or longer. In Example 5, the green compact was retained at 800°C and 1500°C for 3 hours or longer each. In Comparative Examples 1 to 2, the midway retention step was not performed. Through these steps above, the silicon nitride sintered compacts 1 according to Examples and those according to Comparative Examples were obtained.

The resulting silicon nitride sintered compacts 1 according to Examples were examined for the presence/absence of the solid solution metal and the presence/absence of dislocation defects. The measurement conditions were as described above. Ten or more silicon nitride crystal particles 2 having a major diameter of 0.5 µm or more were selected from the silicon nitride crystal particles 2 in a measurement area of 20 µm × 20 µm, and were measured. The ratios R1 to R3 of the number of atoms were each represented as numeric values from the minimum value to the maximum value in the specific silicon nitride crystal particle 21. The results are shown in Table 3. The results of measurement of the silicon nitride sintered compacts according to Comparative Examples are also shown in Table 3.

**[Table 3]**

| | Ratio R1 of The Number of 1st Atoms [(W+Mo)/Si] | Ratio R2 of The Number of 2nd Atoms [Al/Si] | Ratio R3 of The Number of 3rd Atoms (O/Si) |
|---|---|---|---|
| Example 1 | 0.0005-0.002 | 0.003-0.08 | 0.002-0.08 |
| Example 2 | 0.001-0.009 | 0.003-0.08 | 0.001-1.1 |
| Example 3 | 0.0007-0.005 | 0.003-0.07 | 0.002-1.5 |
| Example 4 | 0.0005-0.005 | 0.001-0.07 | 0.002-0.9 |
| Example 5 | 0.0002-0.003 | 0.001-0.07 | 0.001-1.8 |
| Comparative Example 1 | 0 | 0.001-0.02 | 0.001-0.03 |
| Comparative Example 2 | 0 | 0.001-0.02 | 0.001-0.03 |

| | Proportion U1 of The Number of Specific Silicon Nitride Crystal Particles [%] | Proportion U4 of The Number of Specific Silicon Nitride Crystal Particles Having Dislocation Defects [%] |
|---|---|---|
| Example 1 | 92 | 1 |
| Example 2 | 96 | 5 |
| Example 3 | 88 | 0 |
| Example 4 | 82 | 5 |
| Example 5 | 76 | 8 |
| Comparative Example 1 | - | - |
| Comparative Example 2 | - | - |

With reference to Table 3, in Examples, the ratio R1 of the number of first atoms ((W + Mo)/Si) and the ratio R2 of the number of second atoms were within the preferred ranges calculated from the expressions (1) and (2), respectively. In Example 5, both of W and Mo formed solid solutions with the specific silicon nitride crystal particle 21. In Examples 1, 2, and 4, the ratio R3 of the number of third atoms was within the preferred range specified by the expression (8). In Examples 3 and 5, in part of the specific silicon nitride crystal particles 21, the ratio R3 of the number of third atoms was out of the preferred range specified by the expression (8).

With reference to Table 3, it is shown that in Examples, the proportion U1 [%] of the number of specific silicon nitride crystal particles 21 in the total number of silicon nitride crystal particles 2 satisfied both of the expression (5) and the expression (7). In the specific silicon nitride crystal particle 21, the first solid solution metal (at least one of W and Mo) and the second solid solution metal (Al) form solid solutions. Although not shown in the table, it was found that in Examples, the proportion U2 [%] of the number of different silicon nitride crystal particles 22 in the number of silicon nitride crystal particles 2 satisfied the expression (10).

With reference to Table 3, it is shown that in Examples, the proportion U3 [%] of the number of specific silicon nitride crystal particles 21 having dislocation defects in the total number of specific silicon nitride crystal particles 21 satisfied the expression (13). Although not shown in the table, it was found that in Examples, the proportion U4 [%] of the number of specific silicon nitride crystal particles 21 having dislocation defects in the total number of silicon nitride crystal particles 2 satisfied the expression (15).

In Comparative Examples 1 to 2, solid solution formation of W or Mo with the silicon nitride crystal particles was not observed. In particular, it was found that only by adding WO₃ powder as a sintering aid powder as in Comparative Example 2 shown in Table 1, W did not form a solid solution with silicon nitride crystal particles in a ball blank after sintering.

Next, the average of the major diameters and the average aspect ratio were determined in the silicon nitride crystal particles 2 in each of the ball blanks 6 which were the silicon nitride sintered compacts 1 according to Examples and in the silicon nitride crystal particles in each of the ball blanks which were the silicon nitride sintered compacts according to Comparative Examples. The ball blanks 6 according to Examples and the ball blanks according to Comparative Examples were also measured for 3-point bending strength, fracture toughness, and Vickers hardness. The measurement conditions were as described above. The results are shown in Table 4. The 3-point bending strength was measured using plate-shaped silicon nitride sintered compacts 1 produced under the same conditions as those for the ball blanks 6, instead of the ball blank 6.

**[Table 4]**

| | Silicon Nitride Crystal Particle | |
|---|---|---|
| | Major Diameter Average [µm] | Average Aspect Ratio |
| Example 1 | 3.8 | 3.0 |
| Example 2 | 3.5 | 4.2 |
| Example 3 | 5.1 | 3.2 |
| Example 4 | 4.7 | 3.3 |
| Example 5 | 3.3 | 4.1 |
| Comparative Example 1 | 5.1 | 3.5 |
| Comparative Example 2 | 6.1 | 3.6 |

| | Silicon Nitride Sintered Compact (Ball blank) | | |
|---|---|---|---|
| | 3-Point Bending Strength [MPa] | Fracture Toughness [MPa · m^{1/2}] | Vickers Hardness HV |
| Example 1 | 950 | 7.0 | 1510 |
| Example 2 | 1010 | 7.4 | 1550 |
| Example 3 | 930 | 7.1 | 1520 |
| Example 4 | 950 | 6.5 | 1520 |
| Example 5 | 1020 | 7.1 | 1500 |
| Comparative Example 1 | 920 | 7.0 | 1480 |
| Comparative Example 2 | 900 | 7.1 | 1450 |

As shown in Table 4, in the silicon nitride crystal particles 2 in the ball blanks 6 according to Examples and the silicon nitride crystal particles in the ball blanks according to Comparative Examples, the average of the major diameters was in the range of 0.5 µm or more and 10 µm or less and the average aspect ratio was in the range of 2 or more and 10 or less. For the fracture toughness, any significant difference was not observed between Examples and Comparative Examples. Slightly higher 3-point bending strength and Vickers hardness were observed in Examples. When the machinable coefficients in Examples and Comparative Examples were determined, they were 0.12 or less and any significant difference was not observed.

Ball blanks 6 according to Examples and ball blanks according to Comparative Examples were prepared. The ball blanks 6 according to Examples and the ball blanks according to Comparative Examples were both ball blanks for obtaining 3/8-inch (diameter: 9.525 mm) bearing balls. These ball blanks each had a band portion on a perimeter of a spherical green compact.

Next, using a diamond grinding wheel, the ball blanks 6 according to Examples and the ball blanks according to Comparative Examples were polished to have a surface roughness Ra of 0.01 µm. In Examples and Comparative Examples, the time till replacement of the diamond grinding wheel was compared. The time till replacement of the diamond grinding wheel in each of Examples was represented as a ratio to the time till replacement of the diamond grinding wheel in Comparative Example 1 which was regarded as 100. A greater numeric value indicates a longer time till replacement of the grinding wheel, and thus, higher durability of the grinding wheel.

The time taken to polish each ball blank to have a surface roughness Ra of 0.01 µm using the diamond grinding wheel was measured. The polishing time in each of Examples was represented as a ratio to the polishing time in Comparative Example 1 which was regarded as 100. A smaller numeric value indicates a shorter polishing time. The results are shown in Table 5.

**[Table 5]**

| | Time Till Replacement of Grinding Wheel | Ratio of Processing Time Until Surface Roughness Ra Reaches 0.01 µm |
|---|---|---|
| Example 1 | 114 | 79 |
| Example 2 | 118 | 77 |
| Example 3 | 112 | 90 |
| Example 4 | 115 | 86 |
| Example 5 | 110 | 88 |
| Comparative Example 1 | 100 | 100 |
| Comparative Example 2 | 97 | 104 |

As shown in Table 5, the polishing times according to Examples were about 10 to 20% reduced, and the processability was improved. This was because the free-machining properties were improved. In Examples, the time till replacement of the grinding wheel was about 10% improved. This led to an improvement in durability of the grinding wheel. Irrespective of a low machinable coefficient of 0.12 or less, the free-machining properties were improved. Bearing balls 5 obtained by polishing the ball blanks 6 had favorable durability.

In Examples and Comparative Examples, an improvement in processability of the ball blank 6 (which was polished into a bearing ball) as one example of the silicon nitride sintered compact 1 has been verified. However, it is considered that the effect is not limited to the case where the silicon nitride sintered compact 1 is the ball blank 6, and is also obtained in a silicon nitride sintered compact 1 other than the ball blank 6 (silicon nitride sintered compact polished into a wear-resistant member other than the bearing ball) as long as the silicon nitride sintered compact includes the specific silicon nitride crystal particle 21.

According to at least one of the embodiments described above, a silicon nitride sintered compact 1 (e.g., the ball blank 6) having improved processability and a wear-resistant member (e.g., the bearing ball 5) including the same can be provided. Moreover, by controlling the proportion of the number of specific silicon nitride crystal particles 21 having dislocation defects, a silicon nitride sintered compact 1 having improved processability while the wear resistance is maintained and a wear-resistant member including the same can be provided.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A silicon nitride sintered compact including silicon nitride crystal particles and a grain boundary phase, wherein
the silicon nitride crystal particles include a specific silicon nitride crystal particle with which a first solid solution metal containing at least one of tungsten and molybdenum and a second solid solution metal containing aluminum form solid solutions.

2. The silicon nitride sintered compact according to claim 1, wherein for amounts of the solid solutions with the specific silicon nitride crystal particle,
a ratio of a number of atoms of the first solid solution metal to the number of silicon atoms "number of first solid solution metal atoms/number of silicon atoms" is 0.0001 or more and 0.01 or less, and
a ratio of a number of atoms of the second solid solution metal to the number of silicon atoms "number of second solid solution metal atoms/number of silicon atoms" is 0.001 or more and 0.1 or less.

3. The silicon nitride sintered compact according to claim 1 or 2, wherein in any cross-section of the silicon nitride sintered compact, a proportion of a number of the specific silicon nitride crystal particles in a number of the silicon nitride crystal particles in a measurement area of 20 µm × 20 µm is in a range of 10% or more and 100% or less.

4. The silicon nitride sintered compact according to claim 1 or 2, wherein for amounts of the solid solutions with the specific silicon nitride crystal particle, a ratio of a number of oxygen atoms to a number of silicon atoms "number of oxygen atoms/number of silicon atoms" is in a range of 0.001 or more and 1.20 or less.

5. The silicon nitride sintered compact according to claim 3, wherein for amounts of the solid solutions with the specific silicon nitride crystal particle, a ratio of a number of oxygen atoms to a number of silicon atoms "number of oxygen atoms/number of silicon atoms" is in a range of 0.001 or more and 1.20 or less.

6. The silicon nitride sintered compact according to claim 1 or 2, wherein among the silicon nitride crystal particles, a silicon nitride crystal particle not containing either tungsten or molybdenum is defined as a different silicon nitride crystal particle, and
in any cross-section of the silicon nitride sintered compact, a proportion of a number of different silicon nitride crystal particles to a number of the silicon nitride crystal particles in a measurement area of 20 µm × 20 µm is in a range of 0% or more and 30% or less.

7. The silicon nitride sintered compact according to claim 1 or 2, wherein in any cross-section of the silicon nitride sintered compact, a proportion of a number of the specific silicon nitride crystal particles having dislocation defects in a total number of the specific silicon nitride crystal particles in a measurement area of 20 µm × 20 µm is in a range of 0% or more and 10% or less.

8. The silicon nitride sintered compact according to claim 5, wherein in any cross-section of the silicon nitride sintered compact, a proportion of a number of the specific silicon nitride crystal particles having dislocation defects in a total number of the specific silicon nitride crystal particles in a measurement area of 20 µm × 20 µm is in a range of 0% or more and 10% or less.

9. The silicon nitride sintered compact according to claim 1 or 2, wherein an average of major diameters of the silicon nitride crystal particles is in a range of 0.5 µm or more and 10 µm or less, and an average aspect ratio is in a range of 2 or more and 10 or less.

10. The silicon nitride sintered compact according to claim 3, wherein an average of major diameters of the silicon nitride crystal particles is in a range of 0.5 µm or more and 10 µm or less, and an average aspect ratio is in a range of 2 or more and 10 or less.

11. The silicon nitride sintered compact according to claim 8, wherein an average of major diameters of the silicon nitride crystal particles is in a range of 0.5 µm or more and 10 µm or less, and an average aspect ratio is in a range of 2 or more and 10 or less.

12. A wear-resistant member comprising the silicon nitride sintered compact according to claim 1.

13. A wear-resistant member comprising the silicon nitride sintered compact according to claim 3.

14. A wear-resistant member comprising the silicon nitride sintered compact according to claim 10.

15. The wear-resistant member according to claim 13, wherein the wear-resistant member has a sliding surface having a surface roughness Ra of 0.1 µm or less.

16. The wear-resistant member according to claim 14, wherein the wear-resistant member has a sliding surface having a surface roughness Ra of 0.1 µm or less.

17. The wear-resistant member according to claim 15, wherein the wear-resistant member is a bearing ball.

18. The wear-resistant member according to claim 16, wherein the wear-resistant member is a bearing ball.
